# EUROPEAN PATENT APPLICATION

(11) **EP 4 345 931 A1**
(43) Date of publication of application: **03.04.2024**
(21) Application number: 22831587.5
(22) Date of filing: 30.05.2022
(51) Int. Cl.: H01M 4/13

(54) **ELECTRODE PLATE, ELECTROCHEMICAL DEVICE, AND BOTTOM COATING DEVICE**

(30) Priority: 28.06.2021 CN 202121460184 U
(71) Applicant: BYD Company Limited, Shenzhen, Guangdong 518118 (CN)
(72) Inventor: CHEN, Binbin, Shenzhen, Guangdong 518118 (CN)
(74) Representative: Arnold & Siedsma
(86) International application number: PCT/CN2022/096064
(87) International publication number: WO 2023/273765

(57) **Abstract**

An electrode plate includes a current collector, an active material layer, and a conductive layer. The conductive layer is arranged between the current collector and the active material layer. The conductive layer is having an indentation. The indentation is formed to be recessed from one side of the conductive layer in contact with the active material layer toward another side of the conductive layer in contact with the current collector.

## Description

### CROSS-REFERENCE TO RELATED APPLICATION

This application claims priority to and benefits of Chinese Patent Application No. 202121460184.1, filed on June 28, 2021. The entire content of the above-referenced applications is incorporated herein by reference.

### FIELD

The present disclosure relates to the technical field of batteries, and specifically to an electrode plate, an electrochemical device, and a priming device.

### BACKGROUND

As a high-performance power storage medium, lithium-ion batteries have been widely used in electric vehicles and various electronic products. However, to meet people's increasing energy storage demand and achieve higher capacity and longer battery life, enterprises in the lithium-ion battery industry are still developing new materials and processes to improve battery performance.

An electrode plate of a lithium-ion battery is generally prepared by coating an active material on a current collector. In the charging and discharging process, electrons are collected and transported to the active material by the current collector. Therefore, the bonding of the current collector and the active material and interface characteristics of the current collector have a great impact on the battery performance. With the increase of cycles of the battery, the active material will detach from the interface of the current collector, affecting the electron transport, and the current collector will be corroded by the electrolyte solution, resulting in a decrease in the battery capacity.

Therefore, the surface morphology and roughness of the current collector directly affect the bonding of the current collector and the active material. In a priming process, a thin conductive coating is added to between the current collector and the active material, to increase the bonding strength between the active material and the current collector and enhance the electronic conduction between the active material and the current collector, thereby improving the capacity of the battery at high rate. In addition, the priming process inhibits the detachment of the active material from the current collector, due to charging and discharging cycles of the battery over a long time, and enhances the corrosion resistance of the current collector, thereby slowing down the decrease of the battery capacity with cycles.

In the related art, the priming process for electrode plates of lithium-ion batteries is generally realized by gravure printing, in which sufficient priming slurry is carried from ink cells on a gravure roller, then the amount of slurry on the roller is controlled by a scraping structure, and finally the priming slurry is transferred to the current collector under the action of great pressure. In the printing industry, complex coatings with different thicknesses can be realized by controlling the depths of the ink cells on the gravure roller. However, in the lithium-ion battery industry, a primer coating of an electrode plate is basically prepared by a simple full coating method, and no manufacturer has made optimizations on the preparation method. As a result, the priming process leads to a poor conductivity and adhesion between the current collector and the active material.

### SUMMARY

The present disclosure aims to at least solve one of the technical problems in the related art. Therefore, the present disclosure provides an electrode plate which has good conductivity and adhesion between the current collector and the active material layer.

The present disclosure further discloses an electrochemical device.

The present disclosure further discloses a priming device.

An electrode plate according to an embodiment of the present disclosure includes: a current collector; an active material layer; and a conductive layer, arranged between the current collector and the active material layer, the conductive layer having an indentation, the indentation being formed to be recessed from one side of the conductive layer in contact with the active material layer toward another side of the conductive layer in contact with the current collector.

Therefore, with the indentation arranged on the conductive layer and recessed from the side of the conductive layer in contact with the active material layer toward the another side of the conductive layer in contact with the current collector, not only the conductivity and adhesion between the current collector and the active material layer can be improved, but also the protective effect provided by the conductive layer for the current collector can be enhanced, thereby improving the performance of the electrode plate.

According to some embodiments of the present disclosure, a plurality of indentations are provided, and the plurality of indentations are distributed in an orderly manner on the conductive layer.

According to some embodiments of the present disclosure, a coating degree of the indentation is greater than 10%.

According to some embodiments of the present disclosure, the indentation is formed in a strip shape.

According to some embodiments of the present disclosure, the indentation is formed in a wave shape.

According to some embodiments of the present disclosure, a width a1 of the indentation is between 1.0 mm and 5.0 mm.

According to some embodiments of the present disclosure, a spacing between the adjacent indentations is defined as d1, and d1 satisfies the following relational expression: 1 mm≤d1≤5 mm.

According to some embodiments of the present disclosure, d1 satisfies the following relational expression: 1 mm≤d1≤3 mm.

According to some embodiments of the present disclosure, the coating degree of the indentation is between 30% and 80%.

According to some embodiments of the present disclosure, the indentation is formed in any one of a circle shape, an ellipse shape, a cone shape, and a polygon shape.

According to some embodiments of the present disclosure, a diameter of the indentation is 0.3 mm to 5.0 mm.

According to some embodiments of the present disclosure, a spacing between the adjacent indentations is defined as d2, and d2 satisfies the following relational expression: 1 mm≤d2≤15 mm.

According to some embodiments of the present disclosure, d2 satisfies the following relational expression: 1 mm≤d2≤5 mm.

According to some embodiments of the present disclosure, the conductive layer includes a copper foil.

An electrochemical device according to an embodiment of the present disclosure includes the electrode plate described above.

A priming device according to an embodiment of the present disclosure includes: a trough; and a gravure roller, arranged above the trough, the gravure roller being having a printing region, the printing region being having a printing texture for forming an indentation on a conductive layer.

According to some embodiments of the present disclosure, a plurality of strip-like protrusions or dot-like protrusions are uniformly distributed on the printing texture.

According to some embodiments of the present disclosure, the plurality of strip-shaped protrusions are configured in at least one of a strip shape, a wave shape, a circle shape, an ellipse shape, a cone shape, and a polygon shape.

According to some embodiments of the present disclosure, the plurality of dot-like protrusions are configured in at least one of a strip shape, a wave shape, a circle shape, an ellipse shape, a cone shape, and a polygon shape.

According to some embodiments of the present disclosure, the priming device further includes a back plate, arranged to press against the gravure roller.

According to some embodiments of the present disclosure, the priming device further includes a scraper, a blade of the scraper being attached to a surface of the gravure roller.

Additional aspects and advantages of the present disclosure will be partly given in and partly apparent from the description below, or understood through practice of the present disclosure.

### BRIEF DESCRIPTION OF THE DRAWINGS

The above and/or other additional aspects and advantages of the present disclosure become apparent and comprehensible from the description of embodiments in connection with accompanying drawings, in which:
FIG. 1 is a schematic diagram of an electrode plate according to an embodiment of the present disclosure;
FIG. 2 is a top view of a conductive layer according to an embodiment of the present disclosure;
FIG. 3 is a front view of a conductive layer according to an embodiment of the present disclosure;
FIG. 4 is a top view of a conductive layer according to an embodiment of the present disclosure;
FIG. 5 is a diagram showing the relationship between capacity and rate of batteries of comparative examples and examples of the present disclosure;
FIG. 6 is a diagram showing the relationship between capacity and number of cycles of batteries of comparative examples and examples of the present disclosure;
FIG. 7 is a schematic diagram of a gravure roller according to an embodiment of the present disclosure;
FIG. 8 is a schematic diagram of 100% priming on a conductive layer according to an embodiment of the present disclosure;
FIG. 9 is a schematic diagram of dot-like primer indentations on a conductive layer according to an embodiment of the present disclosure; and
FIG. 10 is a schematic diagram of wavy primer indentations on a conductive layer according to an embodiment of the present disclosure.

### List of reference numerals:

100 - electrode plate;
10 - current collector; 11 - active material layer;
20 - conductive layer 21 - indentation;
30 - gravure roller; 31 - printing region; 311 - printing texture.

### DETAILED DESCRIPTION

The embodiments of the present disclosure are described in detail below, and the embodiments described with reference to accompanying drawings are exemplary.

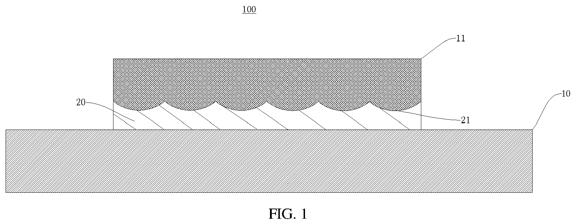

An electrode plate 100 according to an embodiment of the present disclosure will be described below with reference to FIG. 1.

As shown in FIG. 1, the electrode plate 100 according to the embodiment of the present disclosure includes a current collector 10, an active material layer 11, and a conductive layer 20. The conductive layer 20 is arranged between the current collector 10 and the active material layer 11. The conductive layer 20 is having an indentation 21. The indentation 21 is formed to be recessed from one side of the conductive layer 20 in contact with the active material layer 11 toward another side of the conductive layer 20 in contact with the current collector 10.

Specifically, the indentation 21 is arranged on the conductive layer 20, and the indentation 21 is formed to be recessed from the side of the conductive layer 20 in contact with the active material layer 11 toward the another side of the conductive layer 20 in contact with the current collector 10. In this way, the surface roughness of the conductive layer 20 can be increased. The conductivity and adhesion between the current collector 10 and the active material layer 11 can be improved by arranging the conductive layer 20 between the current collector 10 and the active material layer 11, thereby improving the structural stability of the electrode plate 100. In other words, the conductive layer 20 is provided between the current collector 10 and the active material layer 11, and the conductivity between the current collector 10 and the active material layer 11 is improved by the connection using the conductive layer 20. In addition, the arrangement of the indentation 21 on the conductive layer 20 increases the roughness between the conductive layer 20 and the active material layer 11, i.e., increases the contact area between the conductive layer 20 and the active material layer 11, i.e., increases the adhesion strength between the conductive layer 20 and the active material layer 11, thereby improving the adhesion between the current collector 10 and the active material layer 11.

In the present disclosure, with the indentation 21 arranged on the conductive layer 20 and recessed from the side of the conductive layer 20 in contact with the active material layer 11 toward the another side of the conductive layer 20 in contact with the current collector 10, not only the conductivity and adhesion between the current collector 10 and the active material layer 11 can be improved, but also the protective effect provided by the conductive layer for the current collector 10 can be enhanced, thereby improving the performance of the electrode plate 100.

In some embodiments, a plurality of indentations 21 are provided, and the plurality of indentations 21 are distributed in an orderly manner on the conductive layer 20 to form a regular texture. Specifically, the uniform arrangement of the plurality of indentations 21 on the conductive layer 20 makes the conductivity between the current collector 10 and the active material layer 11 more uniform and stable while improving the conductivity and adhesion between the current collector 10 and the active material layer 11, thereby improving the performance of the electrode plate 100. The orderly distribution of the plurality of indentations 21 on the conductive layer 20 and the formation of the regular texture are realized by a gravure roller having a printing texture. Details will be described below.

In some embodiments, the indentation 21 is formed in a strip shape. Specifically, the indentations 21 being formed in a strip shape not only can facilitate the arrangement of the indentations 21 on the conductive layer 20, but also makes the distribution of the indentations 21 on the conductive layer 20 more uniform, thereby improving the reliability and stability of the conductive layer 20.

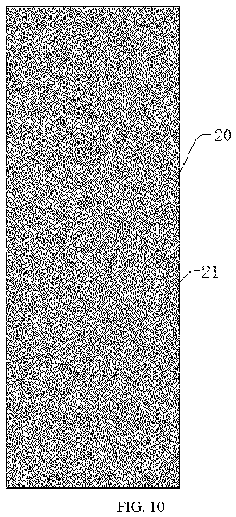

In some other embodiments, as shown in FIG. 1 and FIG. 10, the indentation 21 is formed in a wave shape. Specifically, the indentation 21 being formed in the wave shape can increase the length of the indentation 21 without changing the size of the conductive layer 20, thereby increasing the roughness of the conductive layer 20, improving the conductivity and adhesion between the current collector 10 and the active material layer 11, and improving the performance of the electrode plate 100.

In some embodiments, the indentation 21 may be selectively formed in a strip shape or a wave shape according to specific process requirements of the electrode plate 100, so that the applicability of the conductive layer 20 can be improved.

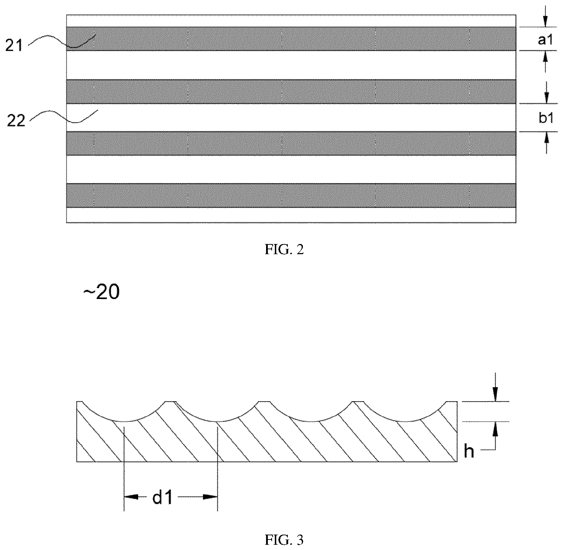

In some embodiments, a width a1 of the strip-shaped or wave-shaped indentation is between 1.0 mm and 5.0 mm, and a width b1 of a planar portion between adjacent strip-shaped or wave-shaped indentations is 0 mm to 4.0 mm. Refer to FIG. 2. FIG. 2 is a top view of a conductive layer according to an embodiment of the present disclosure. In FIG. 2, the indentation 21 is formed in a strip shape, and there is a planar portion 22 between the indentations 21. The width a1 of the indentation is a dimension of the individual indentation in a direction along which the indentations are arranged, and the width b 1 of the planar portion is a dimension of the individual planar portion in the direction along which the indentations are arranged. In some embodiments, a spacing d1 between strip-shaped or wave-shaped indentations is 1 mm≤d1≤5 mm. In some embodiments, the spacing d1 between strip-shaped or wave-shaped indentations is 1 mm≤d1≤3 mm. Refer to FIG. 3. FIG. 3 is a front view of a conductive layer according to an embodiment of the present disclosure. In FIG. 3, the spacing d1 between adjacent indentations 21 is a distance between center lines of adjacent indentations in the same cross-section (where the cross-section is an interface between the conductive layer and the current collector, and the cross-section is parallel to one side of the current collector and perpendicular to another side of the current collector). Specifically, when the indentation 21 is formed in a wave shape or a strip shape, the surface roughness of the conductive layer 20 can be adjusted by adjusting the spacing between the adjacent indentations 21, thereby improving the conductivity and adhesion between the current collector 10 and the active material layer 11, and enhancing the protective effect provided by the conductive layer 20 for the current collector 10. The spacing between the adjacent indentations 21 is set within a reasonable range, and can be adjusted according to different process requirements of different electrode plates 100, thereby simplifying the preparation of the electrode plates 100 and improving the applicability of the conductive layer 20.

In some embodiments, the indentation 21 is formed in at least one of a circle shape, an ellipse shape, a cone shape, and a polygon shape, i.e., the indentation is a dot-like indentation. In this way, the indentation 21 may be prepared by various methods, thereby facilitating the production and manufacture of the indentation 21, simplifying the preparation of the electrode plate 100, and reducing the difficulty of the preparation of the electrode plate 100.

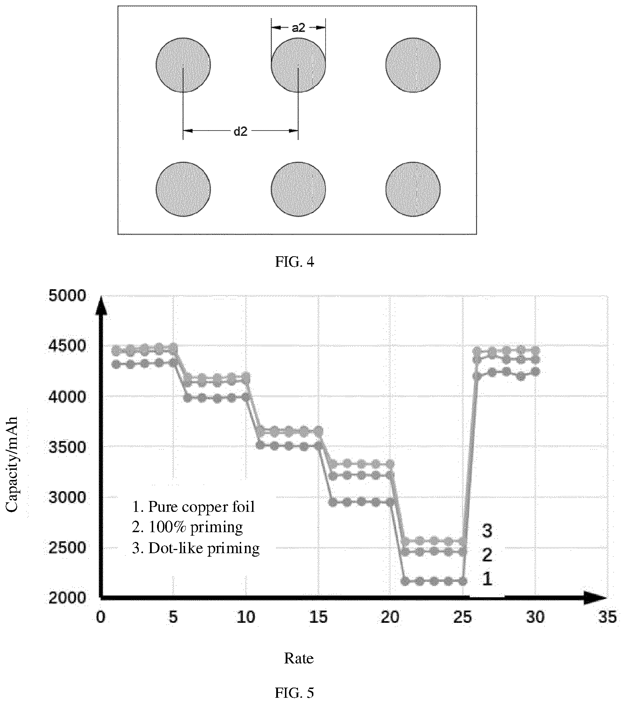

In some embodiments, a width of the dot-like indentation is 0.3 mm to 5.0 mm. Refer to FIG. 4. FIG. 4 is a top view of a conductive layer according to an embodiment of the present disclosure. In FIG. 4, the width a2 of the dot-like indentation is a distance between two outermost points of the indentation, and a spacing d2 between adjacent dot-like indentations 21 is a distance between centers of the adjacent dot-like indentations. In some embodiments, d2 satisfies the following relational expression: 1 mm≤d2≤15 mm. In some embodiments, d2 satisfies the following relational expression: 1 mm≤d2≤5 mm.

In some embodiments, a depth h of the indentation 21 is 0.1 µm to 10.0 µm. In some embodiments, a thickness of the conductive layer ranges from 0.5 µm to 10.0 µm, and the thickness of the conductive layer is greater than the depth of the indentation 21. Refer to FIG. 3. In FIG. 3, the depth h of the indentation 21 is a maximum dimension of the indentation in a thickness direction of the conductive layer. In an implementation of the present disclosure, a coating degree of the indentation is defined as: 1 - the percentage of the depth h of the indentation to the original thickness of the conductive layer. For example, when the original thickness of the conductive layer is 10.0 µm and the depth h of the indentation 21 is 5 µm, the coating degree of the indentation is 50%, i.e., the thickness of the conductive layer at the indentation 21 is 5 µm. In some embodiments, the coating degree of the indentation is greater than 10%. In some embodiments, the indentation 21 is formed in a strip shape or a wave shape, and the coating degree of the indentation is between 30% and 80%. In some embodiments, the indentation 21 is formed in at least one of a circle shape, an ellipse shape, a cone shape, and a polygon shape, and the coating degree of the indentation is between 30% and 80%.

The present disclosure further discloses an electrochemical device, including the electrode plate 100 described above. The arrangement of the electrode plate 100 in the electrochemical device can improve the capacity of the electrochemical device at a high rate, and slow down the decrease of the capacity of the electrochemical device with cycles, thereby improving the reliability of the electrochemical device.

In addition, the conductive layer 20 arranged in this manner can also alleviate the problem that the active material layer 11 falls off due to charging and discharging cycles of the electrochemical device over a long time, and the conductive layer can also enhance the corrosion resistance of the current collector 10. It should be noted that the electrochemical device may be a battery and the electrode plate 100 may be a positive electrode plate or a negative electrode plate of the battery.

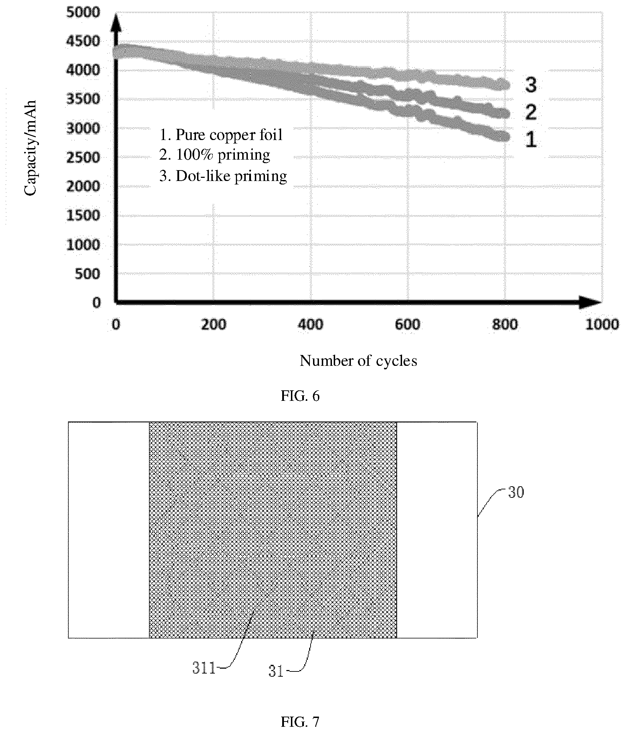

As shown in FIG. 7, FIG. 7 is a schematic diagram of a gravure roller according to an embodiment of the present disclosure. A priming device according to an embodiment of the present disclosure may mainly include a trough and a gravure roller 30. The gravure roller 30 is arranged above the trough. The gravure roller 30 is having a printing region 31. The printing region 31 is having a printing texture 311 for forming an indentation 21 on the conductive layer 20. The printing texture is composed of a plurality of ink cells. The depth of the indentation 21 can be adjusted by controlling a depth of the ink cells on the gravure roller, thereby realizing the preparation of a conductive layer having a texture. Specifically, a foil is arranged above the gravure roller 30 (where the current collector is typically an aluminum foil or a copper foil). The gravure roller 30 is rotatably arranged above the trough. A coating material for coating the foil is arranged in the trough. When the gravure roller 30 rotates, the printing region 31 of the gravure roller 30 may come into contact with the coating material, and the coating material sticks to the printing region 31. As the gravure roller 30 rotates, the coating material is coated on the foil. Because the printing texture 311 is formed on the printing region 31, an indentation 21 may be formed on the foil after the coating material is coated on the printing region 31. Then the foil having the indentation 21 formed on the surface is baked dry to obtain a conductive layer 20. This not only can ensure the structural reliability of the conductive layer 20, but also can facilitate the preparation of the conductive layer 20.

In some embodiments, the priming device further includes a back plate and a scraper. The back plate is arranged to press against the gravure roller 30. Such a structure enables the gravure roller 30 to be closely attached to the foil, thereby improving the coating effect provided by the printing texture 311 on the gravure roller 30 for the foil. In some embodiments, a blade of the scraper is attached to a surface of the gravure roller 30. The scraper can scrape off the excess coating material on the surface of the gravure roller 30, thereby improving the uniformity of coating the foil by the gravure roller 30 and enhancing the structural stability of the conductive layer 20. The foil may be a copper foil.

As shown in FIG. 4, a plurality of strip-like protrusions or dot-like protrusions are uniformly distributed on the printing texture 311. Specifically, the plurality of strip-like protrusions or dot-like protrusions may be configured in at least one of a strip shape, a wave shape, a circle shape, an ellipse shape, a cone shape, and a polygon shape. In this way, the printing texture 311 may be configured in at least one of a strip shape, a wave shape, a circle shape, an ellipse shape, a cone shape, and a polygon shape, and correspond to the indentation 21 on the conductive layer 20. In other words, the coating material on the printing texture 311 in at least one of a strip shape, a wave shape, a circle shape, an ellipse shape, a cone shape, and a polygon shape is directly coated on the foil, and after the foil is dried, the indentation 21 having the corresponding shape can be obtained on the surface of the conductive layer 20. Therefore, the reliability of the priming device can be improved.

A plurality of examples are provided below to compare the performance of the battery having the conductive layer 20 under different conditions.

In Comparative Example 1, the conductive layer 20 of the battery was configured as a pure copper foil without priming, and the internal resistance, the discharge capacity at different rates (0.5 C, 1 C, 2 C, 3 C, and 5 C), and the capacity retention rate after 800 cycles of the battery were measured.

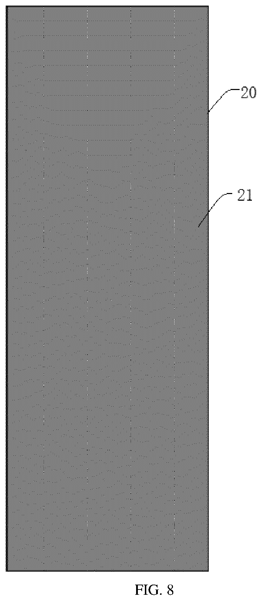

As shown in FIG. 8, in Comparative Example 2, the conductive layer 20 of the battery was configured as a copper foil with 100% priming, and the internal resistance, the discharge capacity at different rates (0.5 C, 1 C, 2 C, 3 C, and 5 C), and the capacity retention rate after 800 cycles of the battery were measured.

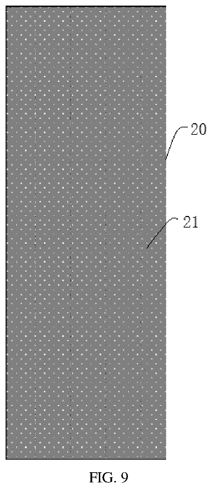

As shown in FIG. 9, in Example 1 of the present disclosure, the conductive layer 20 of the battery was configured as a copper foil with dot-like indentations 21, the coating degree of the dot-like indentation 21 was 50%, the diameter of the dot-like indentation 21 was 1 mm, the spacing between adjacent dot-like indentations 21 was 5 mm, and the internal resistance, the discharge capacity at different rates (0.5 C, 1 C, 2 C, 3 C, and 5 C), and the capacity retention rate after 800 cycles of the battery were measured.

As shown in FIG. 9, in Example 2 of the present disclosure, the conductive layer 20 of the battery was configured as a copper foil with dot-like indentations 21, the coating degree of the dot-like indentation 21 was 10%, the diameter of the dot-like indentation 21 was 1 mm, the spacing between adjacent dot-like indentations 21 was 5 mm, and the internal resistance, the discharge capacity at different rates (0.5 C, 1 C, 2 C, 3 C, and 5 C), and the capacity retention rate after 800 cycles of the battery were measured.

As shown in FIG. 9, in Example 3 of the present disclosure, the conductive layer 20 of the battery was configured as a copper foil with dot-like indentations 21, the coating degree of the dot-like indentation 21 was 30%, the diameter of the dot-like indentation 21 was 1 mm, the spacing between adjacent dot-like indentations 21 was 5 mm, and the internal resistance, the discharge capacity at different rates (0.5 C, 1 C, 2 C, 3 C, and 5 C), and the capacity retention rate after 800 cycles of the battery were measured.

As shown in FIG. 9, in Example 4 of the present disclosure, the conductive layer 20 of the battery was configured as a copper foil with dot-like indentations 21, the coating degree of the dot-like indentation 21 was 90%, the diameter of the dot-like indentation 21 was 1 mm, the spacing between adjacent dot-like indentations 21 was 5 mm, and the internal resistance, the discharge capacity at different rates (0.5 C, 1 C, 2 C, 3 C, and 5 C), and the capacity retention rate after 800 cycles of the battery were measured.

As shown in FIG. 10, in Example 5 of the present disclosure, the conductive layer 20 of the battery was configured as a copper foil with wave-shaped indentations 21, the coating degree of the wave-shaped indentation 21 was 30%, the width of the wave-shaped indentation 21 was 0.8 mm, the spacing between adjacent wave-shaped indentations 21 was 1 mm, and the internal resistance, the discharge capacity at different rates (0.5 C, 1 C, 2 C, 3 C, and 5 C), and the capacity retention rate after 800 cycles of the battery were measured.

As shown in FIG. 10, in Example 6 of the present disclosure, the conductive layer 20 of the battery was configured as a copper foil with wave-shaped indentations 21, the coating degree of the wave-shaped indentation 21 was 30%, the width of the wave-shaped indentation 21 was 0.8 mm, the spacing between adjacent wave-shaped indentations 21 was 2 mm, and the internal resistance, the discharge capacity at different rates (0.5 C, 1 C, 2 C, 3 C, and 5 C), and the capacity retention rate after 800 cycles of the battery were measured.

As shown in FIG. 10, in Example 7 of the present disclosure, the conductive layer 20 of the battery was configured as a copper foil with wave-shaped indentations 21, the coating degree of the wave-shaped indentation 21 was 30%, the width of the wave-shaped indentation 21 was 0.8 mm, the spacing between adjacent wave-shaped indentations 21 was 3 mm, and the internal resistance, the discharge capacity at different rates (0.5 C, 1 C, 2 C, 3 C, and 5 C), and the capacity retention rate after 800 cycles of the battery were measured.

As shown in FIG. 10, in Example 8 of the present disclosure, the conductive layer 20 of the battery was configured as a copper foil with wave-shaped indentations 21, the coating degree of the wave-shaped indentation 21 was 10%, the width of the wave-shaped indentation 21 was 0.8 mm, the spacing between adjacent wave-shaped indentations 21 was 1 mm, and the internal resistance, the discharge capacity at different rates (0.5 C, 1 C, 2 C, 3 C, and 5 C), and the capacity retention rate after 800 cycles of the battery were measured.

As shown in FIG. 10, in Example 9 of the present disclosure, the conductive layer 20 of the battery was configured as a copper foil with wave-shaped indentations 21, the coating degree of the wave-shaped indentation 21 was 50%, the width of the wave-shaped indentation 21 was 0.8 mm, the spacing between adjacent wave-shaped indentations 21 was 1 mm, and the internal resistance, the discharge capacity at different rates (0.5 C, 1 C, 2 C, 3 C, and 5 C), and the capacity retention rate after 800 cycles of the battery were measured.

As shown in FIG. 10, in Example 9 of the present disclosure, the conductive layer 20 of the battery was configured as a copper foil with wave-shaped indentations 21, the coating degree of the wave-shaped indentation 21 was 90%, the width of the wave-shaped indentation 21 was 0.8 mm, the spacing between adjacent wave-shaped indentations 21 was 1 mm, and the internal resistance, the discharge capacity at different rates (0.5 C, 1 C, 2 C, 3 C, and 5 C), and the capacity retention rate after 800 cycles of the battery were measured.

A comparison of the internal resistance values of the batteries in Comparative Example 1, Comparative Example 2, and Examples 1 to 10 of the present disclosure is shown in Table 1 below.

**Table 1. Experimental results of examples and comparative examples**

| Experimental group | AC internal resistance (mΩ) | DC internal resistance (mΩ) |
|---|---|---|
| Comparative Example 1: Pure copper foil | 78.88 | 252.5 |
| Comparative Example 2: 100% priming | 72.50 | 216.2 |
| Example 1: 50% dot-like priming | 70.41 | 200.8 |
| Example 2: 10% dot-like priming | 72.33 | 211.3 |
| Example 3: 30% dot-like priming | 68.45 | 188.8 |
| Example 4: 90% dot-like priming | 71.88 | 210.3 |
| Example 5: 30% wavy priming (at intervals of 1 mm) | 65.33 | 167.5 |
| Example 6: 30% wavy priming (at intervals of 2 mm) | 67.33 | 180.5 |
| Example 7: 30% wavy priming (at intervals of 3 mm) | 70.22 | 200.7 |
| Example 8: 10% wavy priming (at intervals of 1 mm) | 71.68 | 208.2 |
| Example 9: 50% wavy priming (at intervals of 1 mm) | 69.59 | 195.7 |
| Example 10: 90% wavy priming (at intervals of 1 mm) | 72.25 | 210.8 |

As can be seen from Table 1, the battery using the pure copper foil as the conductive layer 20 has the highest internal resistance, the battery using the copper foil with 100% priming as the conductive layer 20 exhibits a significant decrease in internal resistance, and the battery using the copper foil with dot-like or wavy priming as the conductive layer 20 exhibits a further decrease in internal resistance.

As shown in FIG. 5, by comparing the discharge capacity at different rates (0.5 C, 1 C, 2 C, 3 C and 5 C) and the capacity retention rate after 800 cycles of the batteries in Comparative Example 1, Comparative Example 2, and Example 1 of the present disclosure, it can be seen that: the decrease of the capacity of the battery using the pure copper foil as the conductive layer 20 with the increase of the rate is the most serious, the decrease of the capacity of the battery using the copper foil with 100% priming as the conductive layer 20 with the increase of the rate is significantly alleviated, and the decrease of capacity of the battery using the copper foil with dot-like priming as the conductive layer 20 with the increase of the rate is further suppressed.

As shown in FIG. 6, by comparing the discharge capacity at different rates (0.5 C, 1 C, 2 C, 3 C and 5 C) and the capacity retention rate after 800 cycles of the batteries in Comparative Example 1, Comparative Example 2, and Example 1 of the present disclosure, it can be seen that: the decrease of the capacity of the battery using the pure copper foil as the conductive layer 20 with cycles is the most serious, the decrease of the capacity of the battery using the copper foil with 100% priming as the conductive layer 20 with cycles is significantly alleviated, and the decrease of capacity of the battery using the copper foil with dot-like priming as the conductive layer 20 with cycles is further suppressed.

As shown in FIG. 5 and FIG. 6, it can be seen from the above results that the priming can effectively improve the high rate performance and long cycle performance of the battery, and the primer coating having a texture can further enhance the bonding of the active material layer 11 and the current collector 10, thereby further improving the battery performance.

By comparing Comparative Example 1, Comparative Example 2, and Examples 1 to 4 of the present disclosure, it can be seen that the effects of dot-like priming with a texture at different coating degrees on the high rate discharge capacity and the capacity retention rate have the following relationship: 30% priming > 50% priming > 90% priming > 10% priming. It should be noted that if the coating degree is further decreased to 10%, the effect of dot-like priming with a texture on the high rate discharge capacity and the capacity retention rate will be lowered. Therefore, for dot-like priming with a texture, the coating degree preferably ranges from 10% to 90%.

By comparing Examples 5 to 7 of the present disclosure, it can be seen that the effects of wavy priming with a texture at different wavy texture spacings on the high rate discharge capacity and the capacity retention rate have the following relationship: spacing between adjacent wave textures of 1 mm > spacing between adjacent wave textures of 2 mm > spacing between adjacent wave textures of 3 mm.

Further, by comparing Examples 8 to 10 of the present disclosure, it can be seen that the effects of wavy priming with a texture at different coating degrees on the high rate discharge capacity and the capacity retention rate have the following relationship: 30% priming > 50% priming > 10% priming > 90% priming. Therefore, for wavy priming with a texture, the coating degree preferably ranges from 10% to 90%.

As can be seen from the above, the effect of priming with the same texture on the high rate discharge capacity and the capacity retention rate is also affected by the coating degree of the texture and the texture spacing, so optimization needs to be made according to different conditions.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inner", "outer", "clockwise", "counterclockwise", "axial", "radial", and "circumferential" are based on orientation or position relationships shown in the accompanying drawings, and are used only for ease and brevity of illustration and description, rather than indicating or implying that the mentioned apparatus or component need to have a particular orientation or need to be formed and operated in a particular orientation. Therefore, such terms should not be construed as limiting of the present disclosure.

In the description of the specification, the description with reference to the terms "an embodiment", "some embodiments", "exemplary embodiments", "example", "specific example", or "some example" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An electrode plate, comprising:
a current collector;
an active material layer; and
a conductive layer, arranged between the current collector and the active material layer, the conductive layer having an indentation, the indentation being formed to be recessed from one side of the conductive layer in contact with the active material layer toward another side of the conductive layer in contact with the current collector.

2. The electrode plate according to claim 1, wherein a plurality of indentations are provided, and the plurality of indentations are distributed in an orderly manner on the conductive layer.

3. The electrode plate according to claim 2, wherein a coating degree of the indentation is greater than 10%.

4. The electrode plate according to claim 3, wherein the indentation is formed in a strip shape or a wave shape.

5. The electrode plate according to claim 4, wherein a width a1 of the indentation is between 1.0 mm and 5.0 mm.

6. The electrode plate according to claim 3 or 4, wherein a spacing between the adjacent indentations is defined as d1, and d1 satisfies the following relational expression: 1 mm≤d1≤5 mm.

7. The electrode plate according to claim 6, wherein the coating degree of the indentation is between 30% and 80%.

8. The electrode plate according to claim 3, wherein the indentation is formed in any one of a circle shape, an ellipse shape, a cone shape, and a polygon shape.

9. The electrode plate according to claim 8, wherein a width of the indentation is 0.3 mm to 5.0 mm.

10. The electrode plate according to claim 8 or 9, wherein a spacing between the adjacent indentations is defined as d2, and d2 satisfies the following relational expression: 1 mm≤d2≤15 mm.

11. The electrode plate according to claim 10, wherein d2 satisfies the following relational expression: 1 mm≤d2≤5 mm.

12. The electrode plate according to claim 11, wherein the coating degree of the indentation is between 20% and 70%.

13. An electrochemical device, comprising: an electrode plate according to any one of claims 1 to 12.

14. A priming device, comprising:
a trough; and
a gravure roller, arranged above the trough, the gravure roller having a printing region, the printing region having a printing texture for forming an indentation on a conductive layer.

15. The priming device according to claim 14, wherein protrusions uniformly distributed on the printing texture are in at least one of a strip shape, a wave shape, a circle shape, an ellipse shape, a cone shape, and a polygon shape.
